# EUROPEAN PATENT APPLICATION

(11) **EP 1 580 746 A1**
(43) Date of publication of application: **28.09.2005**
(21) Application number: 04708010.6
(22) Date of filing: 04.02.2004
(51) Int. Cl.: G11B 20/10

(54) **DATA RECORDING/REPRODUCTION METHOD AND RECORDING/REPRODUCTION DEVICE**

(30) Priority: 12.02.2003 JP 2003033998
(71) Applicant: SONY CORPORATION, Tokyo 141-0001 (JP)
(72) Inventor: YAMAUCHI, Yasuharu, Sony Corporation, Shinagawa-ku, Tokyo 1410001 (JP)
(74) Representative: Smith, Samuel Leonard
(86) International application number: PCT/JP2004/001094
(87) International publication number: WO 2004/072972

(57) **Abstract**

The present invention concerns a recording method for copying content data on a CD-R by using a personal computer. When the content data is not recorded in the CD-R, the ID of the CD-R and the data are recorded and the ID is stored in the personal computer used for recording the data. When the data is recorded on the CD-R, the ID is read from the CD-R. When the read ID is stored in the personal computer, the data is permitted to be recorded on the CD-R. When the read ID is not stored in the personal computer, the data is prohibited from being recorded in the CD-R.

## Description

### Technical Field

The present invention relates to a recording method and a recording device, and a reproducing method and a reproducing device for data in which an illegal copy of data such as content data is regulated.

This application claims a priority based on Japanese Patent Application No. 2003-033998 filed on February 12, 2003, in Japan, which is applied to this application by referring thereto.

### Background Art

As a recording medium of digital data such as audio data or video data, a CD-R (Compact Disc-Recordable) has been usually employed. On the CD-R, the digital data can be easily written by using an information processor such as a personal computer.

The CD-R is a write-once type recording medium in which the digital data can be written only once. However, a writing controlling software for controlling the writing of the data relative to this disc is used to write the data. Thus, data can be additionally written, after a recording operation at one time, in an area of the CD-R in which data is not written yet. That is, the CD-R can be used as a write-once disc in which data can be additionally recorded by using a proper writing controlling software to write the data.

Since the CD-R can be provided with such a function, the CD-R is widely employed as the recording medium of various kinds of data such as the audio data, the video data, and document data. An example of the CD-R used as a recording medium of various kinds of data is disclosed in Japanese Patent Application laid-Open No. 2000-311114.

However, since the CD-R does not have a peculiar ID (identification) for specifying the CD-R, the CD-R is undesirably used as a recording medium for illegally copying data. For instance, the CD-R is used as a recording medium for taking out and copying only a part of music from an audio CD in which the contents of music are recorded, or collecting and copying a plurality of music suitably selected from a plurality of audio CDs.

Further, the CD-R is used as a recording medium of content data of music collected through a communication network such as an internet, and further used as a recording medium when the collected content data is distributed to another persons.

As described above, since the CD-R can be used as the recording medium for copying the content data of the music or the like, the advantage of a person who provides the contents of the music or the like may be possibly unnecessarily damaged.

### Disclosure of the Invention

It is an object of the present invention to provide a recording method and a recording device, and a reproducing method and a reproducing device for data capable of solving the above-described problems of the related art.

It is another object of the present invention to provide a recording method and a recording device, and a reproducing method and a reproducing device in which the illegal copy of data such as content data is assuredly regulated.

A recording method for recording data in the recording media by a recording device proposed for achieving the above-described objects includes the steps of: reading identifying information for identifying recording media from the recording media; and recording the data on the recording media when the recording device stores the read identifying information.

Further, a recording method for recording data in the recording media by a recording device according to the present invention includes the steps of: preparing identifying information when the identifying information for identifying recording media is not recorded on the recording media; recording the prepared identifying information and the data on the recording media; and storing the prepared identifying information in the recording device.

Further, a recording method for identifying data on the recording media by a recording device according to the present invention includes the steps of: discriminating whether or not identifying information for identifying a recording media is recorded on the recording media; preparing the identifying information when the identifying information is not recorded on the recording media as a result of the discrimination; recording the prepared identifying information and the data on the recording media; storing the prepared identifying information in the recording device; reading the identifying information from the recording media when the identifying information is recorded on the recording media as a result of the discrimination; and recording the data in the recording media when the recording device stores the read identifying information.

In the recording method according to the present invention, the step of recording the data has contents that the data is encoded by key data generated by using the identifying information and the encoded data is recorded in the recording media.

Further, the identifying information is prepared on the basis of information peculiar to the recording device.

Further, a recording device for recording data in a recording media according to the present invention includes: a reading means for reading identifying information for identifying the recording media from the recording media; a storing means for storing the identifying information; and a discriminating means for discriminating whether or not the identifying information read by the reading means is stored in the storing means. When the discriminating means discriminates that the identifying information read by the reading means is stored in the storing means, the discriminating means records the data in the recording media.

Further, a recording device for recording data in a recording media according to the present invention includes: a discriminating means for discriminating whether or not identifying information for identifying the recording media is recorded in the recording media; a preparing means for preparing the identifying information; and a storing means for storing the identifying information. When the discriminating means discriminates that the identifying information is not recorded in the recording media, the preparing means prepares the identifying information, the prepared identifying information and the data are recorded in the recording media, and the prepared identifying information is stored in the storing means.

Still further, the present invention provides a recording device for recording data in a recording media. The recording device includes: a reading means for reading identifying information for identifying the recording media from the recording media; a preparing means for preparing the identifying information; and a storing means for storing the identifying information. When the reading means discriminates that the identifying information is not recorded on the recording media, the preparing means prepares the identifying information, the prepared identifying information and the data are recorded in the recording media, and the prepared identifying information is stored in the storing means. When the reading means discriminates that the identifying information is recorded in the recording media, the data is recorded on the recording media.

A reproducing method for data according to the present invention includes the steps of: reading identifying information and data from a recording media in which the identifying information and the data encoded on the basis of the identifying information are recorded; decoding the read data to reproducing data on the basis of the read identifying information; and performing a reproduction from the reproducing data.

Further, a reproducing device according to the present invention includes: a reading means for reading identifying information and data from a recording media in which the identifying information and the data encoded on the basis of the identifying information are recorded; a decoding means for decoding the read data to reproducing data on the basis of the identifying information read by the reading means; and a reproducing means for preparing the reproducing data obtained by the decoding means.

In a recording media according to the present invention, data is recorded and identifying information peculiar to the recording media that is stored in a device used for recording the data is recorded.

Still another objects of the present invention and specific advantages obtained by the present invention will be more apparent from the explanation of an embodiment described below by referring to the drawings.

### Brief Description of the Drawings

Fig. 1 is a block diagram showing a personal computer forming a recording device according to the present invention and a CD player forming a reproducing device.
Fig. 2A is a diagram showing a music file accumulated in a hard disc drive, a data base and a copy routine, and Fig. 2B is a diagram showing data recorded in a CD-R.
Fig. 3 is a flowchart showing a procedure for copying music by using a personal computer.

### Best Mode for Carrying Out the Invention

Now, a recording method and a recording device, and a reproducing method and a reproducing device for data according to the present invention will be specifically described below.

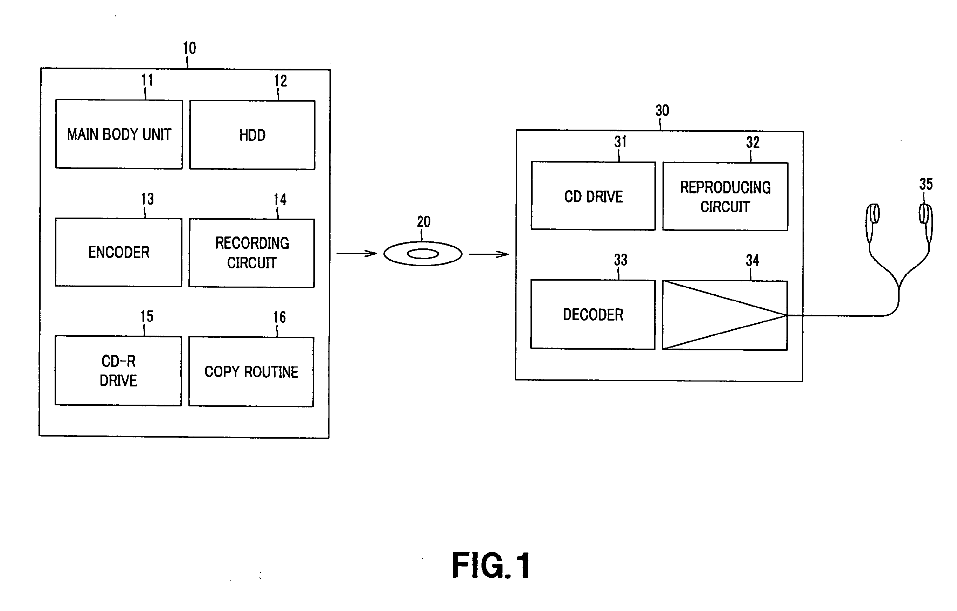

In the present invention, as shown in Fig. 1, a CD-R (Compact Disc-Recordable) 20 is used as a recording medium for copying, namely, recording content data such as a musical piece. As means for recording the content data on the CD-R, a personal computer 10 is employed. As means for reproducing the CD-R on which the content data is recorded by the personal computer 10, a CD player 30 is employed.

In the following description, an explanation is given to an example that the musical piece is used as contents.

The personal computer 10 forming the recording device according to the present invention includes a main body unit 11 in which an arithmetic unit or an information processing unit, etc. forming the computer is incorporated, a hard disc drive 12 for recording the data of the musical piece, an encoder 13, a recording circuit 14, a CD-R drive device 15, and a copy routine storing unit 100.

Here, the main body unit 11, which is not shown in the drawing, includes a CPU (Central Processing Unit), a hard disc drive, a memory, an input and output interface, a user interface, or the like, and forms a main unit of the personal computer.

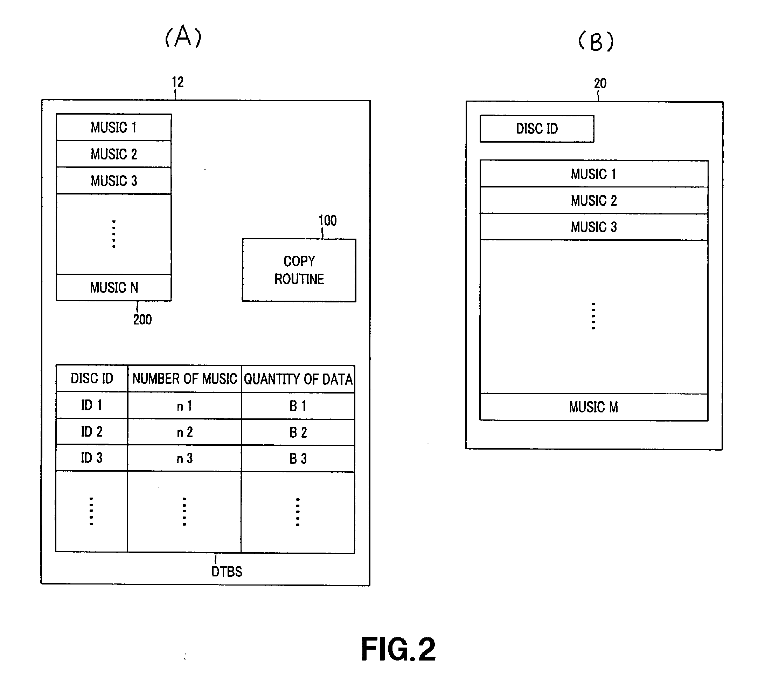

In the hard disc drive 12 forming the main body unit 11, a music file 200 composed of a plurality of musical pieces (music 1 to music N) that are permitted to be copied is accumulated under a state of files having a prescribed format as shown in Fig. 2A. In this embodiment, in the music 1 to the music N accumulated in the hard disc drive, the digital audio data thereof is compressed by, for instance, an ATRAC3 (registered trademark) (Adaptive Transform Acoustic Coding 3) system.

Further, as shown in Fig. 2A, a data base DTBS is prepared in the hard disc drive 12. In the data base DTBS, a disc ID for identifying the CD-R 20, the number of music recorded on the CD-R 20, and a quantity of all data of the music (the number of bytes) are stored in the form of a list as described below.

As the hard disc drive 12, a hard disc drive incorporated in the main body unit 11 can be used. That is, the hard disc drive 12 may employ a part of the hard disc drive in which an OS (Operating System) or an application of the personal computer 10 is installed.

The encoder 13 is used to encode the audio data of music when the music recorded in the hard disc drive 12 is copied in the CD-R.

Further, the recording circuit 14 performs an encoding process for correcting an error in recorded data upon recording the data and a modulating process for recording. The CD-R drive device 15 optically records a recording signal outputted from the recording circuit 14 on the CD-R 20.

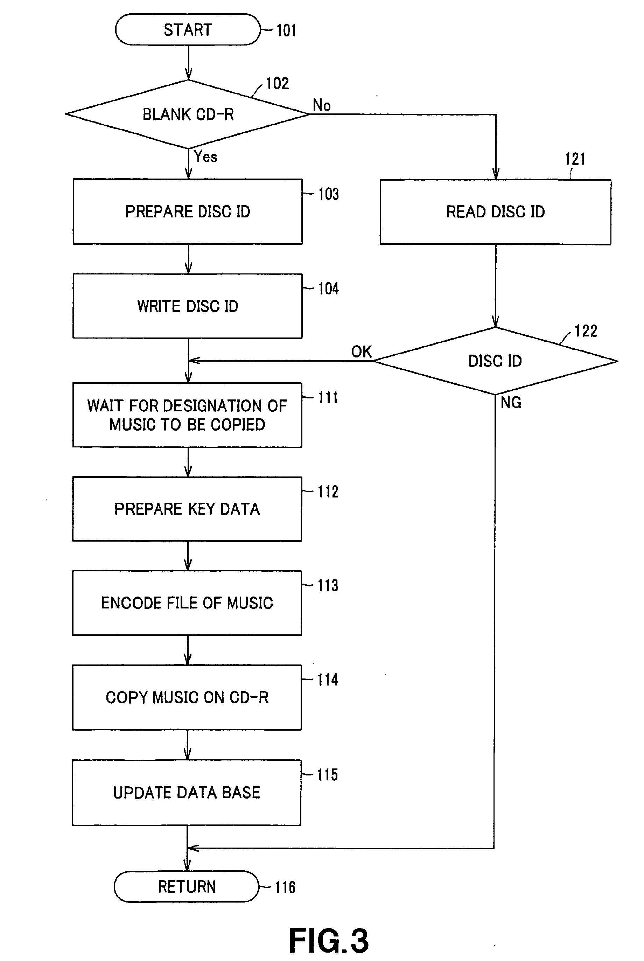

The detail of the copy routine 100 will be described below. The copy routine includes, for instance, a procedure as shown in Fig. 3 and controls a recording operation so as to perform a proper copy when the music is copied on the CD-R 20. The copy routine 100 is stored in a storing unit that is not shown in the drawing. As the storing unit, the hard disc drive 12 can be employed. In this embodiment, the copy routine 100 is stored in the hard disc drive 12.

The CD player 30 used in the present invention is formed as a portable member and includes a CD drive unit 31, a reproducing circuit 32, a decoder 33, and an amplifier 34. The CD drive unit 31 is a unit for optically reading the data of the music recorded in the CD-R. The reproducing circuit 32 performs a demodulating process and a decoding process for correcting an error to a reproducing signal read from the CD drive unit 31 to output an original audio signal. Then, the decoder 33 performs a decoding process of the encoded audio data and an expanding process of the compressed audio data.

The music recorded on the CD-R 20 that is reproduced by the above-described CD player 30 is outputted as an analog audio signal and reproduced as an acoustic signal audible by the ear of a human being through a headphone 35.

The copy routine 100 for copying the music accumulated in the hard disc drive 12 on the CD-R 20 by using the personal computer 10 forming the recording device according to the present invention is performed as described below.

In this embodiment, an arbitrary musical piece of the music 1 to the music N accumulated in the hard disc drive 12 is copied.

To copy the music, the CD-R 20 in which data is not recorded (blank) is initially set on the CD-R drive device 15. Then, a copying operation is carried out. Then, the process of the copy routine 100 is started in step 101. Thus, in step 102, whether or not the CD-R 20 mounted on the CD-R drive device 15 is blank is checked.

Here, the blank CD-R designates a CD-R in which the data is not recorded by the recording method of the present invention. The blank CD-R designates a CD-R in which a below-described disc ID is not recorded in a prescribed recording area. When the CD-R in which data or the like is recorded by a method that is not based on the recording method according to the present invention has an effective blank recording area, the CD-R includes the blank CD-R that is employed in the present invention.

Then, in the step 102, when it is detected that the blank CD-R is mounted on the CD-R drive device 15, the procedure advances to step 103. In the step 103, the disc ID is formed. This disc ID is an identifying code peculiar to the CD-R 20. In this embodiment, the information of hardware of the personal computer 10 is used as a material to generate a random number of a prescribed bit length and the random number is processed to form the disc ID.

Subsequently, in step 104, as shown in Fig. 2B, the disc ID formed in the step 103 is recorded in the prescribed recording area of the CD-R 20. When the blank CD-R is checked in the step 102, a checking operation is carried out by using the recorded disc ID.

Then, the process advances to step 111. In the step 111, a designation of a musical piece to be copied on the CD-R 20 is waited for among the music 1 to the music N prepared in the hard disc drive 12. Thus, when one or two or more musical pieces to be copied are designated, the process advances to step 112 from the step 111. In the step 112, encoding main key data is prepared. That is, the disc ID formed in the step 103 is used to form sub key data and the main key data is encoded by the sub key data. When there are plurality of musical pieces designated in the step 111, the encoded main key data is different between the musical pieces.

Subsequently, the process advances to step 113. In the step 113, a file of the musical piece designated in the step 111 among the music 1 to the music N prepared in the hard disc drive 12 is encoded. In the encoding process, the main key data prepared in the step 112 is used. Then, when the encoding process of the step 113 is completed, the process advances to step 114. In the step 114, as shown in Fig. 2B, the file of the musical piece processed in the step 113 is recorded in the CD-R 20.

When a copying process is finished, the process advances to step 115. In the step 115, the data base DTBS in the hard disc drive 12 is updated. In this case, since the musical piece is copied on the CD-R 20 in which the data is not recorded, the disc ID formed in the step 103, the number of the musical pieces that are copied on the CD-R 20, and a quantity of all the data of the musical pieces (the number of byres) are written in the data base DTBS as one set.

At this time, the disc ID written in the data base DTBS is formed in the step 103 and written in the CD-R 20 in the step 104. Then, the process advances to step 116 to complete the copying process of the musical pieces on the CD-R 20.

Therefore, according to the steps 101 to 104 and the steps 111 to 116, when the CD-R 20 in which the data is not recorded is prepared, the musical pieces prepared in the hard disc drive 12 are copied on the CD-R 20. At this time, the peculiar disc ID is given to the CD-R 20 and the disc ID is registered in the data base DTBS. A reproducing operation of the CD-R 20 will be described below.

Now, an operation will be described for additionally copying a musical piece on the CD-R 20 in which the musical piece prepared in the hard disc drive 12 is copied as described above.

Here, the additional copy of the musical piece means a case that a new musical piece is additionally copied on the CD-R 20 by using the same personal computer for copying the musical pieces on the CD-R 20. The additional copy of the musical piece on the same CD-R 20 by using the same personal computer 10 is permitted.

In this case, the CD-R 20 on which the musical piece is copied in accordance with the above-described procedure is set on the CD-R drive device 15 to perform the copy routine 100. Then, in the step 102, it is detected that the CD-R 20 set on the CD-R drive device 15 is not blank. The process of the step 102 advances to a process of step 121.

In the step 121, the disc ID is read from the CD-R 20. Then, in step 122, it is discriminated whether or not the disc ID read in the step 121 is included in the data base DTBS. In this case, since the disc ID is already recorded on the CD-R 20 by the personal computer 10, the disc ID read from the CD-R 20 is present in the data base DTBS.

Accordingly, the process advances to the step 111 from the step 122. Thus, the processes after the step 111 are performed in the same manner as that when the musical piece is initially copied on the CD-R 20 in which the data is not recorded. The musical piece is additionally copied on the CD-R 20 in accordance with the same procedure as the above-described procedure.

In such a way, the musical piece accumulated on the hard disc drive 12 can be newly additionally copied on the CD-R 20 on which the musical piece is copied once by using the personal computer that forms the CD-R 20.

Now, an operation will be described for additionally copying a musical piece on the CD-R 20 on which the musical piece is copied once by a personal computer 10X different from the personal computer 10 that is used for copying the musical piece on the CD-R 20 on which the musical piece prepared in the hard disc drive 12 is copied as described above.

The personal computer 10X used herein has an equal function to that of the previously employed personal computer 10.

Here, the additional copy of the musical piece by using other personal computer 10X than the personal computer 10 that copies the musical piece on the CD-R 20 once is prohibited.

When the CD-R 20 on which the musical piece is already copied is set on the personal computer 10X so that a copy routine is carried out for additionally copying the musical piece on the CD-R 20 on which the musical piece is already copied by using the personal computer 10X other than the personal computer 10 that copies the musical piece on the CD-R 20 once, in the step 102, it is detected that the CD-R 20 set on the CD-R drive device 15 is not blank. Thus, the process of the step 102 advances to the process of the step 121. In the step 121, the disc ID is read from the CD-R 20. Then, in the step 122, it is discriminated whether or not the disc ID read in the step 121 is included in a data base DTBS.

Since the CD-R 20 set on the personal computer 10X has the musical piece copied by other personal computer 10, a disc ID equal to the disc ID read from the CD-R 20 does not exist in the data base DTBS of the hard disc drive 12 of the personal computer 10X. Accordingly, the process advances to the step 116 from the step 122 to finish the copy routine 100.

Therefore, even when the personal computer 10X is a personal computer having the same function as that of the previously used personal computer 10, the musical piece cannot be additionally copied on the CD-R 20 on which the musical piece is copied by the personal computer 10, by using other personal computer 10X. Thus, the additional copy is prohibited.

The above-described matter indicates a fact as described below. That is, when the musical piece is copied on the CD-R 20 by a specific personal computer 10, even if other personal computer having the same function as that of the personal computer 10 that is used once is prepared, the musical piece cannot be additionally copied on the CD-R 20. In other words, the music piece cannot be copied on one CD-R 20 by employing a different personal computer.

Therefore, the CD-R 20 is equivalent to a CD-ROM (Compact disc Read Only memory) from other personal computer than the personal computer 10 that is used to copy the musical piece once on the CD-R 20. Further, the recorded musical piece is encoded. Accordingly, the CD-R 20 is inconvenient for an illegal circulation to suppress the wide distribution of the copy.

Now, a reproducing operation of the CD-R 20 on which the musical piece accumulated in the hard disc drive 12 of the personal computer 10 is copied as described above will be described below.

The CD-R 20 on which the musical piece is copied can be reproduced by using the CD player 30.

To reproduce the CD-R 20, the CD-R 20 is mounted on the CD drive unit 31 of the CD player 30 to read the data of the musical piece recorded on the CD-R 20 by the CD drive unit 31. The data of the musical piece read from the CD drive unit 31 is inputted to the reproducing circuit 32 to perform a demodulating and error correcting processes thereto. From the reproducing circuit 32, the disc ID of the CD-R 20 to be reproduced and the signal of the encoded musical piece are outputted.

These signals are supplied to the decoder 33. Key data for decoding is formed by using the fetched disc ID and the signal of the encoded musical piece is decoded by the key data. The decoded signal of the musical piece is supplied to the headphone 35 through the amplifier 34. The signal of the musical piece supplied to the headphone 35 as an analog signal is reproduced as an acoustic sound audible by the ear of a human being.

In the above-described embodiment, a description is given to an example that the CD-R is employed as the recording media. However, any of media capable of recording data may be employed, including a recording media capable of additionally recording data such as a DVD-R (DVD Recordable), a rewritable recording media such as a CD-RW (Compact Disc Rewritable) or a DVD-RW (DVD Rewritable) in which data can be repeatedly rewritten, a magnetic disc, a magneto-optical disc, or a semiconductor memory.

Further, information that is copied is not limited to the music data and may be an electronic file including an image data such as a still image or a moving image, a text data such as a sentence, the data of various kinds of data bases, a program data, or the like.

Further, according to the above-described embodiment, in the hard disc drive 12, the audio data of the musical piece is compressed and recorded. However, the audio data may not be compressed and recorded on the hard disc drive 12. When the musical piece is copied on the CD-R, the data may be compressed before the data is encoded.

Further, the audio data of the music pieces that are accumulated in the hard disc drive 12 may be compressed and encoded. In this case, the encoder 13 is not necessary. Further, when there is room in an arithmetic circuit of the main body unit 11, the encoder 13 may be realized by a software process of the main body unit 11.

It is to be understood to a person with ordinary skill in the art that the present invention is not limited to the above-described embodiment explained by referring to the drawings and various changes, substitutions or equivalence thereto may be made without departing the attached claims and the gist thereof.

### Industrial Applicability

As described above, according to the present invention, since the copying operation of data such as content data on the same CD-R by using a different personal computer is regulated, an illegal copy can be assuredly prevented.

## Claims

1. A recording method for recording data in the recording media by a recording device, said recording method comprising the steps of:
reading identifying information for identifying recording media from the recording media; and
recording the data on the recording media when the recording device stores the read identifying information.

2. The recording method according to claim 1, wherein the step of recording the data includes encoding the data by key data formed by using the identifying information, and recording the encoded data in the recording media.

3. A recording method for recording data in the recording media by a recording device, said recording method comprising the steps of:
preparing identifying information when the identifying information for identifying recording media is not recorded on the recording media;
recording the prepared identifying information and the data on the recording media; and
storing the prepared identifying information in the recording device.

4. The recording method according to claim 3, wherein the step of recording the data includes encoding the data by key data formed by using the identifying information, and recording the encoded data in the recording media.

5. The recording method according to claim 3, wherein the identifying information is prepared on the basis of information peculiar to the recording device.

6. A recording method for identifying data on the recording media by a recording device, said recording method comprising the steps of:
discriminating whether or not identifying information for identifying a recording media is recorded on the recording media;
preparing the identifying information when the identifying information is not recorded on the recording media as a result of the discrimination;
recording the prepared identifying information and the data on the recording media;
storing the discriminated identifying information in the recording device;
reading the identifying information from the recording media when the identifying information is recorded on the recording media as a result of the discrimination; and
recording the data in the recording media when the recording device stores the read identifying information.

7. The recording method according to claim 6, wherein the step of recording the data includes encoding the data by key data formed by using the identifying information, and recording the encoded data in the recording media.

8. The recording method according to claim 6, wherein the identifying information is prepared on the basis of information peculiar to the recording device.

9. A recording device for recording data in a recording media; said recording device comprising:
a reading means for reading identifying information for identifying the recording media from the recording media;
a storing means for storing the identifying information; and
a discriminating means for discriminating whether or not the identifying information read by the reading means is stored in the storing means; wherein when the discriminating means discriminates that the identifying information read by the reading means is stored in the storing means, the data is recorded in the recording media.

10. The recording device according to claim 9, wherein the data is encoded by key data formed by using the identifying information and the encoded data is recorded in the recording media.

11. A recording device for recording data in a recording media, said recording device comprising:
a discriminating means for discriminating whether or not identifying information for identifying the recording media is recorded in the recording media;
a preparing means for preparing the identifying information; and
a storing means for storing the identifying information, wherein when the discriminating means discriminates that the identifying information is not recorded in the recording media, the preparing means prepares the identifying information, the prepared identifying information and the data are recorded in the recording media, and the prepared identifying information is stored in the storing means.

12. The recording device according to claim 11, wherein the data is encoded by key data formed by using the identifying information and the encoded data is recorded in the recording media.

13. The recording device according to claim 11, wherein the preparing means prepares the identifying information on the basis of information peculiar to the recording device.

14. A recording device for recording data in a recording media, said recording device comprising:
a reading means for reading identifying information for identifying the recording media from the recording media;
a preparing means for preparing the identifying information; and
a storing means for storing the identifying information, wherein when the reading means discriminates that the identifying information is not recorded on the recording media, the preparing means prepares the identifying information, the prepared identifying information and the data are recorded in the recording media, and the prepared identifying information is stored in the storing means, and when the reading means discriminates that the identifying information is recorded in the recording media, the data is recorded on the recording media.

15. The recording device according to claim 14, wherein the data is encoded by key data formed by using the identifying information and the encoded data is recorded in the recording media.

16. The recording device according to claim 14, wherein the preparing means prepares the identifying information on the basis of information peculiar to the recording device.

17. A reproducing method comprising the steps of:
reading identifying information and data from a recording media in which the identifying information and the data encoded on the basis of the identifying information are recorded;
decoding the read data to reproducing data on the basis of the read identifying information; and
performing a reproduction from the reproducing data.

18. A reproducing device comprising:
a reading means for reading identifying information and data from a recording media in which the identifying information and the data encoded on the basis of the identifying information are recorded;
a decoding means for decoding the read data to reproducing data on the basis of the identifying information read by the reading means; and
a reproducing means for preparing the reproducing data obtained by the decoding means.

19. A recording media in which data is recorded and identifying information peculiar to the recording media that is stored in a device used for recording the data is recorded.
